# EUROPEAN PATENT APPLICATION

(11) **EP 2 278 693 A1**
(43) Date of publication of application: **26.01.2011**
(21) Application number: 09009406.1
(22) Date of filing: 20.07.2009
(51) Int. Cl.: H02K 53/00

(54) **Method and apparatus for magnetic transformation**

(71) Applicant: Humanitad Foundation, London SW5 9BJ (GB)
(72) Inventor: Larson, Ralf, 435 33 Molnlycke (SE)
(74) Representative: Lind, Urban Arvid Oskar

(57) **Abstract**

A method for extracting electrical energy through the transformation of electromagnetic fields is described. The method comprises the steps of providing at least one electromagnetic coil and flowing water in the proximity of said coil, and generating a quantum field in the form of a three-dimensional Mandelbrot fractal, at a given frequency, between the electromagnetic coil and the flowing water. Furthermore, radiating intention energy is generated at the tapered tip of said fractal. The intention energy is transported via an electrode arranged in said flowing water to an electrically conductive vacuum chamber and converted into electrical energy in the vacuum chamber. A corresponding apparatus is also described.

## Description

### TECHNICAL FIELD

The present invention relates to a method and an apparatus for extracting electrical energy through the transformation of electromagnetic fields.

### BACKGROUND AND PROBLEM

Meeting the world's growing demand for energy is becoming increasingly difficult, expensive and ecologically harmful, in particular as the oil reserves are running out. Moreover, the distribution of energy has become an instrument of power that is used to control markets, both financially and politically. For example, lately the gas distribution in Europe has been intermittently cut off for political reasons.

Other significant risks involve terror attacks and natural disasters, which too may disable the energy supply. The best possible scenario would be for each consumer to have their own energy supply. However, when using existing technology for small-scale extraction of electricity from fuel via an engine as generator, the result is insufficient efficiency and a dependency on fossil fuels and their distribution.

There is therefore a need for new methods and apparatuses for extracting energy, and especially small-scale methods and apparatuses.

### OBJECT OF THE INVENTION AND SOLUTION TO THE PROBLEM

The object of the present invention is thus to provide a method and an apparatus for extracting energy. This object is achieved by the invention as defined in the appended claims.

According to a first aspect of the invention, a method is provided for extracting electrical energy through transformation of electromagnetic fields, comprising the steps of
providing at least one electromagnetic coil and flowing water in the proximity of said coil;
generating a quantum field in the form of a three-dimensional Mandelbrot fractal, at a given frequency, between said electromagnetic coil and the flowing water;
generating, at the tapered tip of said fractal, a radiating intention energy, which further is preferably white or blue-white and pulsating; transporting the energy via an electrode arranged in said flowing water to an electrically conductive vacuum chamber; and
converting, in said vacuum chamber, said intention energy into electrical energy.

According to a further aspect of the invention, an apparatus is provided for extracting electrical energy through the transformation of electromagnetic fields, comprising:
an electromagnetic coil arranged in the proximity of flowing water;
means for generating a quantum field in the form of a three-dimensional Mandelbrot fractal, at a given frequency, between said electromagnetic coil and the flowing water;
means for generating, at the tapered tip of said fractal, a radiating intention energy, which further is preferably white or blue-white and pulsating; and
an electrode arranged in said flowing water for transporting the energy to an electrically conductive vacuum chamber, said vacuum chamber being further arranged to convert said intention energy into electrical energy.

The apparatus and method comprise a method for creating an electric current, which has a substantially higher energy content than the feeding current applied to an electromagnetic coil. Preferably, the coil has a concentric shape in combination with a frequency suited to its purpose, measured for example via an antenna connected to the coil and to earth potential, preferably via a capacitor. This creates a quantum field which, by way of intention techniques, causes preferably de-ionized water, which is mixed with metal powder and circulates in the flow box, to excite high-energy radiation. The radiation can then be collected in a plate applied to the inside of the flow box, which plate conducts the energy through a vacuum chamber comprising electrically conductive material, to a capacitor, which pulses the current, at a matching frequency, to an electrolytic chamber, which serves as protection against excess currents. Advantageously, the current then passes a mechanical switch before leaving the apparatus to undergo, if required, further transformation and frequency adaptation so it can be used by the consumer.

The inventor of the present invention has worked for many years to extract electricity from the potential between the atmosphere and earth. Initially, his research was based on Nicola Tesla's magnet coils and the transport of electricity without fixed conductors. However, an important component was lacking, namely how the borderland between magnetic fields and the subsequently discovered quantum fields can be influenced. A relevant comparison is the now well-known technique of using a heat pump to extract a higher energy than the one supplied, which in the beginning was a concept that was difficult to accept as it resembles that of a perpetual motion machine. By compressing a coolant with the aid of supplied electrical energy, it is possible to extract energy from another source. In the case of heat pumps, this is achieved by using the solar energy stored in the surface of the planet. There are some points of similarity between the present invention and the act of deriving the energy from another source than the one supplied.

The present invention relates to an apparatus and a method for extracting electrical energy through the shape of a magnetic field, which affects flowing water, in close proximity to the consumer.

The highest energy is obtained in the thin layer that occurs between two counteracting forces, the counter-balancing equilibrium layer, also called the zero-point energy. This can be explained by comparing it with the force that holds together the high-precision metallic gauge blocks which were manufactured by C.E. Johansson, and which, when joined together, could not be separated by hand because the air had been driven out from the space between the joined blocks. This is described *inter alia* in Swedish patent SE 17017, and at www.cejohansson.com.

The invention can also be compared with the energy produced during nuclear fission. In order to extract zero-point energy, intention techniques must be used. These techniques will be explained below.

Large intention experiments, conducted for example by Dr Masaru Emoto in Japan, have shown that it is possible to use intention to affect water and its appearance in ice crystals. These findings are discussed, for instance, in "Healing with Water" by Masaru Emoto, The Journal of Alternative and Complementary Medicine, Feb. 2004, 10(1): 19-21 (doi:10.1089/107555304322848913), and at www.masaru-emoto.net/english/e ome home.html. Moreover, web-based intention experiments have been carried out under the guidance of US scientist Lynne Mc Taggart and involving scientist from across the world. This is discussed, for example, at www.theintentionexperiment.com.

From 1980 to 2002, Roger Nelson, Ph.D., served as the coordinator of experimental work in the Princeton Engineering Anomalies Research (PEAR) laboratory at Princeton University. His work focused on the study of consciousness and intention and the role of the mind in the physical world. His work is described, for example, on the web site www.princeton.deu/∼rdnelson/ and in the paper "On the Quantum Mechanics of Consciousness, with Application to Anomalous Phenomena", by Robert G. Jahn and Brenda J. Dunne, 16 April 1985 (available at http://noosphere.global-mind.org/papers/pear/qm.consciousness.pdf).

William Tiller, professor emeritus at the Department of Materials Science and Engineering at Stanford University, and known for his "What the bleep do we know", has published more than 100 scientific reports in the field of Psychoenergetics, which he believes will play an important role in the field of physics in the future. This is discussed, for instance, on the web site www.tillerfoundation.com/index.php, and in the publication "A Brief Introduction to Intention-Host Device Research" by William A. Tiller, Ph.D., and Walter E. Dibble, Jr., Ph.D.

All human creation starts with an intention that targets the functioning and appearance of the intended creation. In other words, even before an invention has become a physical product it exists in the mind of the inventor in the form of images. Inventions are usually described on the basis of the physical prerequisites. The fact that new ideas come from another dimension, in dreams or states of relaxation, is often overlooked. People are often surprised to learn that several individuals in different places around the world can arrive at an invention almost at the same time. There is a collective mechanism of dispersion, which is spiritual rather than physical. It is therefore correct to say that an invention is the result of both spiritual and physical efforts.

Inventors are individuals who have great intention skills, who are able to send mental images and questions to the universe, i.e. to other dimensions, and who in return receive new ideas. The stronger the inventor's presence in the moment, i.e. consciousness, the more impact his intentions will have on the outcome.

There are no perpetual motion machines, only different ways of converting energy. The present invention extends through multiple dimensions. This can be described as gathering the energy from another dimension and adapting it to our physical three-dimensional world. It is like drilling a hole in the wall of your neighbour's place to gather the energy from there. The hole is here represented by the creation of a quantum field, through a concentric magnetic field, which by way of intention causes circulating water to release the zero-point energy as the fractal interacts with the water.

Surprisingly, it has been found that the present invention provides an electrical energy output which exceeds the electrical energy input. These amazing results can be explained, in part, with the aid of the above-mentioned theories.

Currently preferred embodiments are indicated in the dependent claims.

Preferably, the quantum field is generated by having conscious individuals focus on the intention of equilibrium.

Preferably, the quantum field is generated via one or more cone-shaped electromagnetic coils, which interact in air to create a displaced magnetic field resembling a Mandelbrot fractal. Moreover, it is preferred for the quantum field to be amplified by means of a piece of crystal positioned at the centre of the electromagnetic coil, preferably a piece of rock crystal.

Preferably, the apparatus further comprises a sealable protective box enclosing the apparatus, which protective box is preferably made of slabs of slate.

Preferably, the apparatus further comprises a tank provided with partitions, said tank forming a flow box for supplying said flowing water.

The flowing water is preferably pure water, such as distilled water or de-ionized water. Preferably, the flowing water further contains added metal powder, such as iron and/or gold powder.

Furthermore, the outlet of the vacuum chamber is preferably connected to at least one of a capacitor, an electrolytic chamber and a switch. The electrolytic chamber is here preferably an open electrolytic chamber filled with a copper sulphate solution and the switch is preferably adapted to pull apart the electrodes.

Advantageously, the apparatus further comprises a loosely wound antenna with one or more electrically conductive wires, which are arranged to be electrically interconnected in the shape of a globe, for example by means of an electrically conductive adhesive or by soldering. One side of the antenna globe can be connected to one of the feeding poles of the electromagnetic coil and the other side of the antenna is connected to earth potential, via a capacitor. Moreover, it is preferred for the antenna's measuring signal to be gathered from the capacitor. Advantageously, the apparatus can further comprise a computer programme arranged to detect the desired curve shape of the voltage and/or current curves to and from the antenna, and to scan a frequency band, at regular intervals and/or when the curves change, in order to identify the altered frequency that produces these curves and to transfer the new frequency to the measuring and control equipment, which locks on the new frequency, to the coil.

For the purpose of this application, the term "earth potential" refers to a large mass which acts as an electric opposite pole or earth. This can be achieved by means of a conventional connection to earth, but can also be achieved, for example, by means of a connection to a mass of a heavy material.

For the purpose of this application, the term "water" refers to pure water as well as to water-based solutions, such as water to which metal powder has been added.

### DESCRIPTION OF THE DRAWINGS

The invention will now be described in more detail, reference being made to the accompanying drawings.
Fig. 1 is an overall view of an apparatus according to an embodiment of the invention.
Fig. 2 is a 2D view with the two fractals in the position shown in Fig. 1.
Fig. 3 is a 2D view with the fractals in the joined position.
Fig. 4 is a perspective view of a 3D fractal.
Fig. 5 is a cross-sectional view of the electromagnetic coil shown in Fig. 1.

### DESCRIPTION OF EMBODIMENTS

The invention will now be described in more detail with reference to the accompanying drawings and the embodiment illustrated thereon. However, the invention is not limited to the illustrated embodiment, and other embodiments are also conceivable and fall within the scope of the invention.

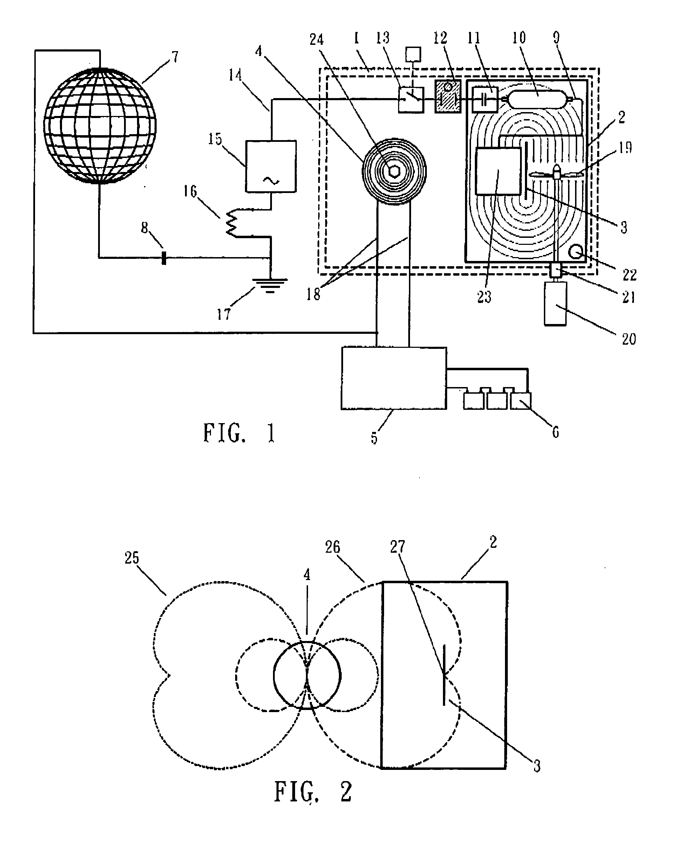

An apparatus according to one embodiment of the invention, as shown in Fig. 1, comprises a protective box 1 enclosing the apparatus, which protective box is made of, for example, slate. Inside the protective box 1 a water tank in the form of a flow box 2, made for example of glass, is provided. The flow box 2 preferably comprises a partition wall 3, which is arranged at the centre of the flow box. The flow box further comprises means for creating flow in the water, such as an agitator 19, which is connected via a watertight shaft lead-through 21 to an agitator motor 20. Preferably, the flow box further comprises a draining/filling opening 22 for draining water from the water tank and for filling the tank with water, respectively.

The apparatus further comprises an electromagnetic coil 4 arranged inside the protective box 1 but outside the flow box 2. The coil 4 is connected via feeders 18 to measuring and control equipment 5 and to a battery power supply 6. Advantageously, a piece of crystal 24, for example rock crystal, is arranged at the centre of the coil 4.

To enable tapping of energy from the flow box the apparatus further comprises an electrode 23, here in the form of a plate, which is connected via a conductor 9 to a vacuum tank 10. The vacuum tank is preferably connected via a capacitor 11, an electrolyte 12 and a switch 13 to an output conductor 14 for the output of current. The current output 14 can be connected, for example, to an output control cabinet 15, which in addition is connected to a consumer load 16, and then to earth potential 17.

Moreover and advantageously, an antenna 7 can be provided, preferably in the form of a globe antenna. Preferably, the antenna is connected to the earth potential 17 via a capacitor 8, and to the measuring and control equipment 5.

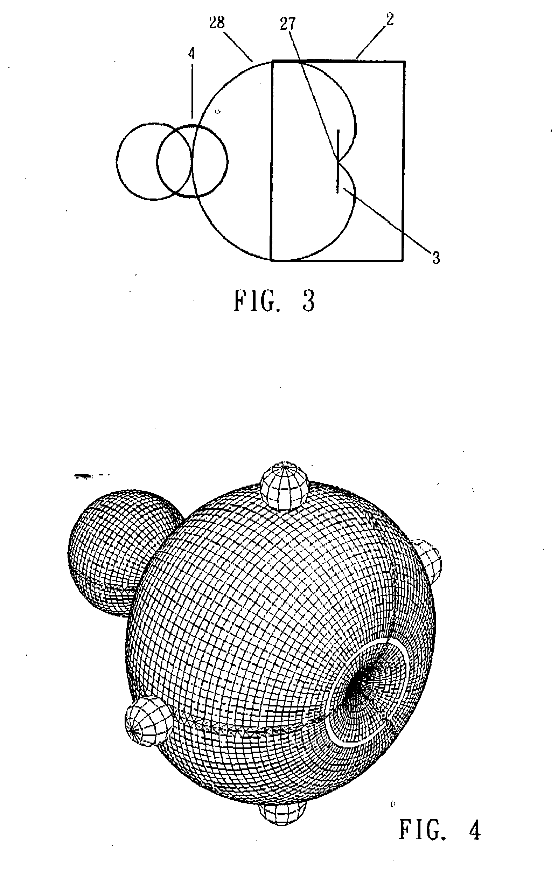

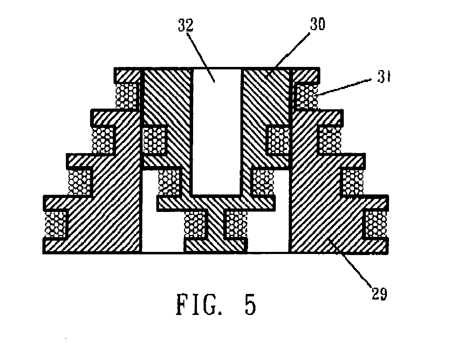

By generating a concentric, electromagnetic field by means of one or more tapered electromagnetic coils 4, as shown in Fig. 5, a disequilibrium or displacement of the magnetic field resembling a Mandelbrot fractal, albeit three-dimensional, is obtained, as shown in Fig. 4.

One of the conductors of the coils is connected to the preferably vertically adjustable antenna 7. The other conductor of the antenna is connected to earth potential 17 via a capacitor 8. By measuring the frequency that is fed to the coil and the frequency returned by the antenna, as measured across the capacitor, it is possible to identify the resonance frequency that has the lowest frequency band. Preferably, a frequency in the range 81.5250-81.5268 Hz is used. This frequency varies over time and the feed frequency of the coil must be adjusted accordingly. It has been found that a feed frequency of 81.46-81.49 gives the narrower frequency band returned by the antenna, which preferably is 81.52.

The frequency control preferably has at least a four decimal accuracy.

The antenna preferably is positioned at least a few metres from the coil. The antenna is suitably designed as a globe of electrically conductive mesh (with a diameter of approximately 400 mm).

In addition to a strong magnetic field around the coil, two quantum fields are generated, each with the shape of a Mandelbrot fractal, albeit three-dimensional. These are oriented rotated at 180° relative to each other, transversely of the magnetic field of the coil. In order to amplify the quantum field, a clear and pure piece of crystal 24 is placed at the centre of the electromagnetic coil.

Preferably, the coil is placed, together with a water tank, in a box made of slabs of slate and provided with a lid. The slate box serves to protect the process against negative intentions.

The water tank is designed as a flow box, having a centrally situated partition wall and some kind of agitating mechanism, for example a motor-driven propeller, which is adapted to create a vigorous circulation. The coil is situated in the portion of the box located opposite the water tank and is surrounded by air. A preferred position relative to the fractal is shown in Fig. 1.

Preferably, the water tank is filled with approximately 45 litres of pure water, for example distilled water. Moreover, a metal powder in the form of iron (e.g. 10 g) and a pinch of gold are preferably added. A plate made of, for example, copper is glued to the inside of the water tank halfway along the long side facing the coil, where a lead-through wire is connected to the first control unit, situated on top of the short side of the water tank, for the purpose of converting the intention energy from the water into electrical energy.

The control unit 1 consists here of a vacuum tank of pure copper metal. Preferably, a vacuum of at least 2.0 x 10⁻⁵ bar is maintained therein. The control unit 2 is a capacitor whose function is to pulse the energy. The control unit 3 is an electrolytic chamber with two copper terminals and an intermediate liquid consisting of a saturated copper sulphate solution. Its function is to act as a safety apparatus if the current becomes excessively high. Should this occur, the vapour that is produced can be discharged through an opening leading to the air outside the box.

The last control unit 4 is a mechanical switch, which is capable of withstanding the high temperatures that occur in connection with the formation of an electric arc. Materials such as graphite or other high-temperature resistant materials can be used for this purpose.

The energy box is activated by a pulsed direct current (inverter) with a pre-set frequency being fed the coil so that a magnetic field is generated in the air. By having several conscious individuals (at least one of whom is projecting through the third eye) simultaneously focusing on the coil, sending out the intention of equilibrium, the quantum field will eventually produce two fractals.

By means of a new intention the fractal that is oriented away from the water tank is rotated in such a manner that it is positioned above the fractal that is oriented towards the water tank. Once this procedure has been completed, the two fractals will be perceived as one, the tip of its v-shaped end being situated at the centre of the central wall of the water tank.

The intention work is then focused on the creation of an energy connection through the establishment of equilibrium between the v-shaped tip of the fractal, in the portion of that half of the water tank that is closest to the coil, and the piece of crystal in the coil.

Next, the intention work is focused on producing a white or blue-white pulsing light, preferably with a pulse rate of approximately 80 beats per minute, which originates at the tip of the fractal and spreads in the water.

When a number of 20-minute sessions have succeeded in producing the white intention light, the transfer to the plate in the water and to the four control units begins. Once the process has stabilized and the consumer has begun using the current, switching may be carried out, so that a smaller part of the generated energy is fed to the coil.

The slate box also forms a safety barrier against the negative radiation occurring a few centimetres outside the water tank. For a period of two hours from the moment when the process is halted, the different parts inside the casing must not be touched. The water will be used up and should be changed every month to obtain the best results. The box needs to be maintained once or twice a month using intention techniques.

### INDEX OF REFERENCE NUMERALS

1. protective box made of slate
2. flow box made of glass
3. partition wall
4. electromagnetic coil
5. measuring and control equipment
6. battery power supply
7. globe antenna
8. capacitor connected to earth
9. conductor
10.vacuum tank
11.pulse capacitor
12.electrolyte
13.switch
14.conductor, current output
15.output control cabinet
16.consumer load
17.connection to earth potential
18.feeders to the coil
19.agitator
20.agitator motor
21.watertight shaft lead-through
22.filling/draining opening
23.plate
24. rock crystal
25.left fractal
26.right fractal
27.tip of the fractal
28.jointed fractals (25 + 26)
29.outer bobbin
30.inner bobbin
31.electric conductor
32.recess adapted for a piece of rock crystal

## Claims

1. A method for extracting electrical energy through transformation of electromagnetic fields, **characterised in** the steps of
providing at least one electromagnetic coil and flowing water in the proximity of said coil;
generating a quantum field in the form of a three-dimensional Mandelbrot fractal, at a given frequency, between said electromagnetic coil and the flowing water;
generating, at the tapered tip of said fractal, a radiating intention energy;
transporting the energy via an electrode arranged in said flowing water to an electrically conductive vacuum chamber; and
converting, in said vacuum chamber, said intention energy into electrical energy.

2. A method as claimed in claim 1, wherein the quantum field is generated by having conscious individuals focus on the intention of equilibrium.

3. A method as claimed in any one of claims 1-2, wherein said quantum field is generated via one or more cone-shaped electromagnetic coils, which interact in air to create a displaced magnetic field resembling a Mandelbrot fractal.

4. A method as claimed in claim 3, wherein the quantum field is amplified by means of a piece of crystal positioned at the centre of the electromagnetic coil, preferably a piece of rock crystal.

5. An apparatus for extracting electrical energy through transformation of electromagnetic fields, **characterised by**
an electromagnetic coil arranged in the proximity of flowing water;
means for generating a quantum field in the form of a three-dimensional Mandelbrot fractal, at a given frequency, between said electromagnetic coil and the flowing water;
means for generating, at the tapered tip of said fractal, a radiating intention energy; and
an electrode arranged in said flowing water for transporting the energy to an electrically conductive vacuum chamber, said vacuum chamber being further arranged to convert said intention energy into electrical energy.

6. An apparatus as claimed in claim 5, wherein said means for generating a quantum field comprises one or more cone-shaped electromagnetic coils, which interact in air to create a displaced magnetic field resembling a Mandelbrot fractal.

7. An apparatus as claimed in claim 6, wherein said means for generating the quantum field further comprises a piece of crystal positioned at the centre of the electromagnetic coil for amplifying the quantum field, preferably a piece of rock crystal.

8. An apparatus as claimed in any one of claims 5-7, further comprising a sealable protective box enclosing the apparatus, which protective box is preferably made of slabs of slate.

9. An apparatus as claimed in any one of claims 5-8, further comprising a tank provided with partitions, said tank forming a flow box for supplying said flowing water.

10. An apparatus as claimed in any one of claims 5-6, wherein said flowing water is pure water, preferably distilled and de-ionized water, and further contains added metal powder, such as iron and/or gold powder.

11. An apparatus as claimed in any one of claims 5-10, wherein the outlet of the vacuum chamber further is connected to at least one of a capacitor, an electrolytic chamber and a switch.

12. An apparatus as claimed in any one of claims 5-11, further comprising a loosely wound antenna with one or more electrically conductive wires, which are arranged to be electrically interconnected in the shape of a globe, for example by means of an electrically conductive adhesive or by soldering.

13. An apparatus as claimed in claim 12, wherein one side of the antenna globe is connected to one of the feeding poles of the electromagnetic coil and the other side of the antenna is connected to earth potential, via a capacitor.

14. An apparatus as claimed in claim 13, wherein the antenna's measuring signal is gathered from the capacitor.

15. An apparatus as claimed in claim 13 or 14, further comprising a computer programme arranged to detect the desired curve shape of the voltage and/or current curves to and from the antenna, and to scan a frequency band, at regular intervals and/or when the curves change, in order to identify the altered frequency that produces these curves and to transfer the new frequency to the measuring and control equipment, which locks on the new frequency, to the electromagnetic coil.
